# DEMANDE DE BREVET EUROPEEN

(11) **EP 1 167 439 A1**
(43) Date de publication de la demande: **02.01.2002**
(21) Numéro de dépôt: 01401516.8
(22) Date de dépôt: 12.06.2001
(51) Int. Cl.: C08L 25/06, C08L 71/12, C08L 53/02

(54) **Mélanges d'une résine vinyle aromatique et de polyphénylène ether à tenue au choc améliorée**

(30) Priorité: 20.06.2000 FR 0007848
(71) Demandeur: Atofina, 92800 Puteaux (FR)
(72) Inventeur: Court, Francois, 27470 Fontaine L'Abbe (FR); Leibler, Ludwik, 75016 Paris (FR); Bonnet, Anthony, 27470 Serquigny (FR); Bertin, Denis, 13380 Plan de Cuques (FR)
(74) Mandataire: Neel, Henry

(57) **Abrégé**

La présente invention concerne un matériau rigide à base de PPO et d'une résine vinyle aromatique à tenue au choc améliorée comprenant :
- 99 à 20% d'une résine (A) constituée d'un mélange de PPO et d'une résine vinyle aromatique,
- 1 à 80% d'un modifiant choc comprenant au moins un copolymère à blocs S-B-M dans lequel:
   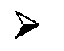 chaque bloc est relié à l'autre au moyen d'une liaison covalente ou d'une molécule intermédiaire reliée à l'un des blocs par une liaison covalente et à l'autre bloc par une autre liaison covalente,
   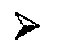 M est constitué de monomères MMA éventuellement copolymérisés avec d'autres monomères et comprend au moins 50% en poids de méthacrylate de méthyle(MMA),
   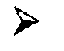 B est incompatible avec la résine (A) et avec le bloc M et sa température de transition vitreuse Tg est inférieure à la température d'utilisation du matériau rigide,
   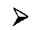 S est incompatible avec le bloc B et le bloc M et sa Tg ou sa température de fusion Tf est supérieure à la Tg de B,
   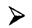 S est compatible avec la résine (A).

La résine vinyle aromatique est avantageusement le polystyrène et le tribloc S-B-M est constitué respectivement de polystyrène, de polybutadiène et de PMMA.

## Description

### [Domaine de l'invention]

La présente invention concerne des mélanges d'une résine vinyle aromatique et de polyphénylène ether à tenue au choc améliorée et plus particulièrement des mélanges de polystyrène (PS) et de polyphénylène ether (PPO) à tenue au choc améliorée. Le mélange PPO/PS est un matériau rigide qui présente une température Vicat élevée mais qui est extrêmement fragile. Le polystyrène peut être un polystyrène ordinaire ou un grade de polystyrène renforcé aux chocs qu'on désigne par PSchoc ou HIPS (abréviation de High Impact Polystyrène). L'invention concerne des mélanges PPO/PS dans lesquels on a ajouté des copolymères triblocs S-B-M pour améliorer leur tenue au choc. Ces triblocs sont constitués par exemple d'un bloc en polystyrène (bloc S), d'un bloc en polybutadiène (bloc B) et d'un bloc en PMMA (bloc M).

### [L'art antérieur et le problème technique]

Le mélange PPO/PS (témoin 1 dans les [Exemples] ci dessous) est un matériau rigide (module de flexion 2820 MPa) qui présente une température Vicat élevée mais qui est extrêmement fragile. Il est connu que la substitution du polystyrène par un grade de polystyrène renforcé aux chocs permet d'améliorer significativement la résistance aux chocs du mélange PPO/PS (témoin 2 dans les [Exemples] ci dessous). Cette amélioration du choc se traduit par une légère baisse du module et une légère baisse de la température Vicat.

Pour certaines applications le renforcement obtenu en utilisant un PSchoc dans un mélange PPO/PS n'est pas suffisant. Pour résoudre cette difficulté, de nombreux travaux et brevets font état de l'utilisation de copolymères à blocs S-B-S linéaires ou en étoiles, de S-EB-S et de S-B-polycaprolactone pour l'amélioration du choc. Les copolymères à blocs S-B-S sont constitués par exemple d'un bloc en polystyrène (bloc S), d'un bloc en polybutadiène (bloc B) et d'un autre bloc en polystyrène. Les S-EB-S sont des copolymères à blocs S-B-S dont le bloc B a été hydrogéné. Les copolymères S-B-polycaprolactone sont constitués d'un bloc en polystyrène (bloc S), d'un bloc en polybutadiène (bloc B) et d'un bloc en polycaprolactone.

Le renforcement des mélanges PPO/PS par des copolymères blocs S-EB-S par l'addition de 20% de tribloc S-EB-S permet une amélioration très significative de la résistance aux chocs à température ambiante. L'amélioration de la résistance aux chocs à basse température (-30°C) est plus limitée mais demeure importante. En revanche, l'addition de S-EB-S se traduit par une diminution très importante de la rigidité du matériau. En effet, on constate une baisse de module de flexion de 700MPa. De plus, cette baisse de module est accompagnée par une baisse de la température Vicat de l'ordre de 15 à 20°C qui peut être rédhibitoire pour les applications de ces mélanges.

Le brevet EP 0 086 448, montre que le renforcement obtenu avec un S-B-S en étoile commercialisé par la société Phillips Petroleum sous la référence Solprene 411 est identique à celui obtenu avec un tribloc S-B-polycaprolactone. De même, la température de fléchissement sous charge (HDT) des matériaux obtenus à partir de ces deux copolymères sont comparables. Le seul avantage d'utiliser les copolymères blocs comprenant un bloc en polycaprolactone est que les compositions obtenues sont plus fluides et donc plus faciles à utiliser par exemple pour l'injection dans un moule.

On a maintenant trouvé que l'addition d'un tribloc S-B-M (par exemple PS-PB-PMMA) aux mélanges PPO/PS et PPO/PSchoc ne pénalise pas la fluidité par rapport à l'addition d'un tribloc S-EB-S. Le renforcement obtenu est un peu inférieur à température ambiante mais il est largement suffisant, en revanche les triblocs S-B-M permettent d'obtenir un renforcement plus important à basse température (-30°C). Le résultat le plus surprenant réside néanmoins dans le comportement thermomécanique des produits. En effet, par rapport à l'addition de tribloc S-EB-S, l'amélioration des propriétés choc n'est obtenue qu'aux détriment d'une baisse minime du module de flexion (400Mpa) et d'une baisse très limitée de l'ordre de 4 à 5°C de la température Vicat.

Plus généralement les triblocs S-B-M permettent une amélioration très importante des propriétés choc des matériaux PPO/résine vinyle aromatique avec une baisse minime de la température Vicat et de la rigidité du matériau.

### [Brève description de l'invention]

La présente invention concerne un matériau rigide à base de PPO et d'une résine vinyle aromatique à tenue au choc améliorée comprenant :
- 99 à 20% d'une résine (A) constituée d'un mélange de PPO et d'une résine vinyle aromatique,
- 1 à 80% d'un modifiant choc comprenant au moins un copolymère à blocs S-B-M dans lequel:
   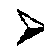 chaque bloc est relié à l'autre au moyen d'une liaison covalente ou d'une molécule intermédiaire reliée à l'un des blocs par une liaison covalente et à l'autre bloc par une autre liaison covalente,
   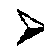 M est constitué de monomères MMA éventuellement copolymérisés avec d'autres monomères et comprend au moins 50% en poids de méthacrylate de méthyle(MMA),
   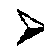 B est incompatible avec la résine (A) et avec le bloc M et sa température de transition vitreuse Tg est inférieure à la température d'utilisation du matériau rigide,
   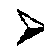 S est incompatible avec le bloc B et le bloc M et sa Tg ou sa température de fusion Tf est supérieure à la Tg de B,
   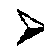 S est compatible avec la résine (A).

### [Description détaillée de l'invention]

**S'agissant du PPO** constituant la résine (A) on désigne par ce terme le polyphénylène oxyde aussi appelé le polyphénylène ether. Ces polymères sont décrits dans Ulmann's encyclopedia of industrial chemistry, éditeur VCH, Vol A 21, pages 605-614, 5^{ième} édition, 1992. Les PPO utilisés dans la présente invention sont avantageusement ceux de formule (1) suivante : 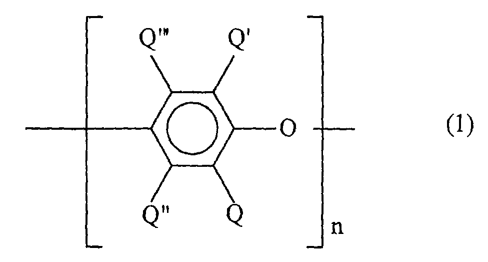 dans laquelle Q, Q', Q" et Q"' sont indépendamment choisis dans le groupe constitué de l'hydrogène, des radicaux alkyles, des radicaux alkyles halogénés ayant au moins deux atomes de carbone entre l'halogène et le noyau du phénol, les radicaux alkoxy et les radicaux alkoxy halogénés ayant au moins deux atomes de carbone entre l'halogène et le noyau du phénol ; Q', Q" et Q"' peuvent être aussi des halogènes mais de préférence Q et Q' ne contiennent pas de carbone tertiaire; et n est un entier valant au moins 50.
Le PPO est avantageusement le poly(2,6-diméthyl-1,4-phénylène) ether.

**S'agissant de la résine vinyle aromatique** constituant la résine (A), par monomère vinylaromatique au sens de la présente invention, on entend un monomère aromatique à insaturation éthylénique tel que le styrène, le vinyltoluène, l'alphaméthylstyrène, le méthyl-4-styrène, le méthyl-3-styrène, le méthoxy-4-styrène, l'hydroxyméthyl-2-styrène, l'éthyl-4-styrène, l'éthoxy-4-styrène, le diméthyl-3,4-styrène, le chloro-2-styrène, le chloro-3-styrène, le chloro-4-méthyl-3-styrène, le tert.-butyl-3-styrène, le dichloro-2,4-styrène, le dichloro-2,6-styrène et le vinyl-1-naphtalène. La résine vinyle aromatique est avantageusement un polymère styrènique.

A titre d'exemple de polymère styrènique on peut citer le polystyrène, le polystyrène modifié par des élastomères, les copolymères du styrène et de l'acrylonitrile (SAN), le SAN modifié par des élastomères en particulier l'ABS qu'on obtient par exemple par greffage (graft-polymérisation) de styrène et d'acrylonitrile sur un tronc de polybutadiène ou de copolymère butadiène-acrylonitrile, les mélanges de SAN et d'ABS. Les élastomères mentionnés ci dessus peuvent être par exemple l'EPR (abréviation d'éthylène-propylène-rubber ou élastomère éthylène-propylene), l'EPDM (abréviation d'éthylène-propylene-diène rubber ou élastomère éthylène-propylene-diène), le polybutadiène, le copolymère acrylonitrile-butadiène, le polyisoprène, le copolymère isoprène-acrylonitrile.

Le polystyrène choc peut être obtenu (i) soit par mélange de polystyrène avec des élastomères tels que le polybutadiène, des copolymères du butadiène et de l'acrylonitrile, du polyisoprène ou des copolymères de l'isoprène et de l'acrylonitrile (ii) soit plus habituellement par greffage de styrène (graft-polymérisation) sur un tronc de polybutadiène ou de copolymère butadiène-acrylonitrile.

Dans les polymères styrèniques qu'on vient de citer une partie du styrène peut être remplacée par des monomères insaturés copolymèrisables avec le styrène, à titre d'exemple on peut citer l'alpha-methylstyrène et les esters (meth)acryliques. Comme exemples des copolymères du styrène, on peut encore citer le chloropolystyrène, le poly-alpha-méthylstyrène, les copolymères styrène-chlorostyrène, les copolymères styrène-propylène, les copolymères styrène-butadiène, les copolymères styrène-isoprène, les copolymères styrène-chlorure de vinyle, les copolymères styrène-acétate de vinyle, les copolymères styrène-acrylate d'alkyle (acrylate de méthyle, d'éthyle, de butyle, d'octyle, de phényle), les copolymères styrène - méthacrylate d'alkyle (méthacrylate de méthyle, d'éthyle, de butyle, de phényle), les copolymères styrène - -chloroacrylate de méthyle et les copolymères styrène - acrylonitrile - acrylate d'alkyle. Dans ces copolymères, la teneur en comonomères va généralement jusqu'à 20% en poids. La présente invention concerne aussi des polystyrènes metallocènes à haut point de fusion. Avantageusement la résine vinyle aromatique constituant la résine (A) est choisie parmi le polystyrène et le polystyrène choc.

Il est bien clair que le PPO et la résine vinyle aromatique(qui peut déjà contenir un modifiant choc) constituant la résine (A) sont miscibles et que le modifiant choc qu'on y ajoute n'est pas un compatibilisant du PPO et de la résine vinyle aromatique. La miscibilité du PPO et de la résine vinyle aromatique constituant la résine (A) est définie par le fait que la résine (A) a au moins une température de transition vitreuse Tg comprise entre celle du PPO et celle de la matrice de la résine vinyle aromatique. Par exemple si la résine vinyle aromatique est un PSchoc la Tg de la matrice est celle du Polystyrène constituant la matrice du PSchoc. L'homme de métier détermine facilement par les méthodes habituelles de mesure si le PPO et la résine vinyle aromatique sont miscibles.

Les proportions de PPO et de résine vinyle aromatique dans la résine (A) peuvent être quelconques et avantageusement telles que le rapport en poids PPO sur résine vinyle aromatique est compris entre 1/9 et 9/1 et de préférence entre 3/7 et 7/3.

**S'agissant du tribloc S-B-M** M est constitué de monomères de méthacrylate de méthyle ou contient au moins 50% en masse de méthacrylate de méthyle, de préférence au moins 75% en masse de méthacrylate de méthyle. Les autres monomères constituant le bloc M peuvent être des monomères acryliques ou non, être réactifs ou non. A titre d'exemples non limitatif de fonctions réactives on peut citer : les fonctions oxiranes, les fonctions amines, les fonctions carboxy. Le monomère réactif peut être l'acide (meth)acrylique ou tout autre monomère hydrolysable conduisant à ces acides. Parmi les autres monomères pouvant constituer le bloc M on peut citer à titre d'exemple non limitatif le méthacrylate de glycidyle le méthacrylate de tertiobutyle. Avantageusement M est constitué de PMMA syndiotactique à au moins 60%.

Avantageusement la Tg de B est inférieure à 0°C et de préférence inférieure à - 40°C.

Le monomère utilisé pour synthétiser le bloc B élastomérique peut être un diène choisi parmi le butadiène, l'isoprène, le 2,3-diméthyl-1,3-butadiène, le 1,3-pentadiène, le 2-phényl-1,3-butadiène. B est choisi avantageusement parmi les poly(diènes) notamment poly(butadiène), poly(isoprène) et leurs copolymères statistiques, ou encore parmi les poly(diènes) partiellement ou totalement hydrogénés. Parmi les polybutadiènes on utilise avantageusement ceux dont la Tg est la plus faible, par exemple le polybutadiène-1,4 de Tg ( vers -90° C) inférieure à celle du polybutadiène-1,2. (vers 0° C). Les blocs B peuvent aussi être hydrogènés. On effectue cette hydrogénation selon les techniques habituelles.

Le monomère utilisé pour synthétiser le bloc B élastomérique peut être aussi un (meth)acrylate d'alkyle, on obtient les Tg suivantes entre parenthèses suivant le nom de l'acrylate: l'acrylate d'éthyle (-24°C), l'acrylate de butyle, (-54°C), l'acrylate de 2-éthylhexyle (-85°C), l'acrylate d'hydroxyéthyle (-15°C) et le méthacrylate de 2-éthylhexyle (-10°C). On utilise avantageusement l'acrylate de butyle. Les acrylates sont différents de ceux du bloc M pour respecter la condition de B et M incompatibles.

De préférence les blocs B sont constitués en majorité de polybutadiène-1,4.

La Tg ou la Tf de S est avantageusement supérieure à 23°C et de préférence supérieure à 50°C. A titre d'exemple de blocs S on peut citer ceux qui dérivent de composés vinylaromatiques tels que par exemple le styrène, l'α-méthyl styrène, le vinyltoluène. Avantageusement le bloc S est constitué des mêmes monomères que la résine vinyle aromatique constituant la résine (A).

Le tribloc S-B-M a une masse molaire moyenne en nombre qui peut être comprise entre 10000 g/mol et 500000 g/mol, de préférence comprise entre 20000 et 200000 g/mol. Le tribloc S-B-M avantageusement a la composition suivante exprimée en fraction massique, le total étant 100% :
M : entre 10 et 80% et de préférence entre 15 et 70%.
B : entre 2 et 80% et de préférence entre 5 et 70%.
S : entre 10 et 88% et de préférence entre 15 et 85%.

Les copolymères blocs utilisés dans les matériaux de la présente invention peuvent être fabriqués par polymérisation anionique par exemple selon les procédés décrits dans les demandes de brevet EP 524.054 et EP 749.987. Ils peuvent aussi être fabriqués par polymérisation radicalaire contrôlée.

Avantageusement la proportion de modifiant choc est de 1 à 35% pour respectivement 99 à 65% de résine (A).

De préférence la proportion de modifiant choc est de 4 à 25% pour respectivement 96 à 75% de résine (A).

**Selon une forme préférée de l'invention** le modifiant choc comprend au moins un copolymère tribloc S-B-M et au moins un copolymère dibloc S-B.

**S'agissant du dibloc S-B** les blocs S et B ont les mêmes propriétés que les blocs S et B du tribloc S-B-M ils sont incompatibles et ils sont constitués des mêmes monomères et éventuellement comonomères que les blocs S et les blocs B du tribloc S-B-M. C'est à dire que les blocs S du dibloc S-B sont constitués de monomères choisis dans la même famille que la famille des monomères disponibles pour les blocs S du tribloc S-B-M. De même les blocs B du dibloc S-B sont constitués de monomères choisis dans la même famille que la famille des monomères disponibles pour les blocs B du tribloc S-B-M.

Les blocs S et B peuvent être identiques ou différents des autres blocs S et B présents dans les autres copolymères blocs du modifiant choc dans le matériau rigide.

Le dibloc S-B a une masse molaire moyenne en nombre qui peut être comprise entre 10000 g/mol et 500000 g/mol, de préférence comprise entre 20000 et 200000 g/mol. Le dibloc S-B est avantageusement constitué d'une fraction massique en B comprise entre 5 et 95% et de préférence entre 15 et 85%.

Le modifiant choc comprend avantageusement entre 5 et 80% de dibloc S-B pour respectivement de 95 à 20% de tribloc S-B-M.

De plus l'avantage de ces compositions est qu'il n'est pas nécessaire de purifier le S-B-M à l'issue de sa synthèse. En effet les S-B-M sont en général préparés à partir des S-B et la réaction conduit souvent à un mélange de S-B et S-B-M qu'on sépare ensuite pour disposer de S-B-M.

Le matériau de l'invention est thermoplastique.

**Selon une autre forme de l'invention** le modifiant choc comprend aussi des copolymères à blocs S-B-S linéaires ou en étoile éventuellement hydrogénés. C'est à dire que le modifiant choc de l'invention peut comprendre:
- soit au moins un tribloc S-B-M,
- soit au moins un tribloc S-B-M et au moins un dibloc S-B,
- soit au moins un tribloc S-B-M, au moins un dibloc S-B et au moins un tribloc S-B-S linéaire ou en étoile,
- soit au moins un tribloc S-B-M et au moins un tribloc S-B-S linéaire ou en étoile.

Des triblocs S-B-S sont décrits dans ULLMANN'S déjà cité plus haut Vol A 26, pages 655 - 659.

A titre d'exemple de triblocs S-B-S on peut citer les linéaires dans lesquels chaque bloc est relié à l'autre au moyen d'une liaison covalente ou d'une molécule intermédiaire reliée à l'un des blocs par une liaison covalente et à l'autre bloc par une autre liaison covalente. Les blocs S et B ont les mêmes propriétés que les blocs S et B du tribloc S-B-M ils sont incompatibles et ils sont constitués des mêmes monomères et éventuellement comonomères que les blocs S et les blocs B du tribloc S-B-M. C'est à dire que les blocs S du tribloc S-B-S sont constitués de monomères choisis dans la même famille que la famille des monomères disponibles pour les blocs S du tribloc S-B-M. De même les blocs B du tribloc S-B-S sont constitués de monomères choisis dans la même famille que la famille des monomères disponibles pour les blocs B du tribloc S-B-M. Les blocs S et B peuvent être identiques ou différents des autres blocs S et B présents dans les autres copolymères blocs du modifiant choc dans le matériau rigide.

Le tribloc S-B-S linéaire a une masse molaire moyenne en nombre qui peut être comprise entre 10000 g/mol et 500000 g/mol, de préférence comprise entre 20000 et 200000 g/mol. Le tribloc S-B-S est avantageusement constitué d'une fraction massique en B comprise entre 5 et 95% et de préférence entre 15 et 85%.

A titre d'autre exemple de triblocs S-B-S on peut citer ceux en étoile. Le terme "tribloc" n'est pas en accord avec le nombre de blocs mais le terme "triblocs S-B-S en étoile" est clair pour l'homme de métier. A titre d'exemple de triblocs en étoile on peut citer ceux de formule : 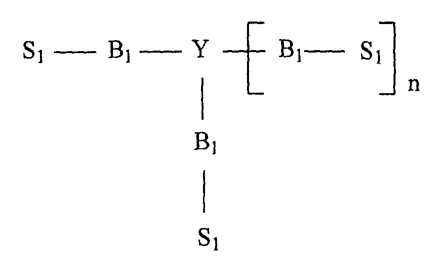 dans laquelle n vaut 1, 2 ou 3 et S₁ et B₁ représentent des blocs. Les blocs S₁ représentent du styrène polymérisé et les blocs B₁ du butadiène polymérisé, de l'isoprène polymérisé ou un mélange de butadiène et d'isoprène polymérisé. Les blocs B₁ peuvent être hydrogénés (il s'agit alors par exemple des S-EB-S). Y est une entité polyfonctionnelle provenant par exemple d'agents de couplage polyfonctionnels qu'on utilise dans la fabrication des copolymères blocs en étoile. De tels agents ainsi que ces copolymères blocs sont décrits dans US 3639521.

Des copolymères blocs en étoile préférés contiennent 15 à 45 % en poids et mieux 25 à 35 % de motifs styrène. La masse molaire est d'au moins 140 000 et mieux d'au moins 160 000.

Des polymères blocs en étoile particulièrement préférés sont ceux décrits dans EP 451920. Ces copolymères sont à base de styrène et d'isoprène, la masse molaire des blocs polystyrène est d'au moins 12000 et la teneur en polystyrène est de 35 % (poids) au plus de la masse totale du copolymère bloc. Les copolymères blocs linéaires préférés ont une masse molaire entre 70000 et 145000 et contiennent 12 à 35 % en poids de polystyrène. Des copolymères blocs linéaires blocs particulièrement préférés sont ceux à base de styrène et d'isoprène décrits dans le brevet européen EP 451919. Ces copolymères ont des blocs polystyrène de masse molaire entre 14000 et 16000 et une teneur en polystyrène comprise entre 25 et 35 % en poids du copolymère bloc. La masse molaire est entre 80000 et 145000 et mieux entre 100000 et 145000.

On peut aussi utiliser un mélange de triblocs S-B-S linéaires et de triblocs S-B-S en étoile. Ces triblocs S-B-S linéaires ou en étoile sont disponibles dans le commerce sous les marques Finaprène®, Finaclear®, Kraton® et Styrolux®.
la proportion de tribloc S-B-S peut représenter jusqu'à 40% en poids du modifiant choc.

**On ne sortirait pas du cadre de l'invention** en remplaçant tout ou partie du tribloc S-B-M par un pentabloc M-B-S-B-M. Ils peuvent être préparés par polymérisation anionique ou radicalaire contrôlée comme les di ou triblocs cités plus haut mais en utilisant un amorceur difonctionnel. La masse molaire moyenne en nombre de ces pentablocs est dans les mêmes intervalles que celle des triblocs S-B-M. La proportion des deux blocs M ensemble, des deux blocs B ensemble est dans les mêmes intervalles que les proportions de S, B et M dans le tribloc S-B-M.

Le matériau de l'invention peut contenir aussi les additifs habituels du PPO et de la résine vinyle aromatique. On peut citer à titre d'exemple les ignifugeants, les colorants, les pigments, les anti UV, les antioxydants, les fibres de verre ou de carbone, les plastifiants, les additifs antistatiques, les processing aids et les charges minérales telles que la silice, le carbonate de calcium. La proportion de ces additifs ne dépasse 50% en poids de l'ensemble résine (A), modifiant choc et additifs.

Les matériaux de l'invention sont fabriqués par mélange à l'état fondu des différents constituants (extrudeuses bivis, BUSS, monovis) selon les techniques habituelles des thermoplastiques. Les compositions peuvent être granulées en vue d'une utilisation ultérieure (il suffit de les refondre) ou bien de suite injectées dans un moule, un dispositif d'extrusion ou de coextrusion pour fabriquer des tubes ou des profilés, un dispositif de fabrication de films.

### [Exemples]

### Produits utilisés :

**PPO :** il s'agit d'un produit à base de poly(2,6-diméthyl-1,4-phénylène) ether, commercialisé par la société HUELS sous la référence VESTORAN 1900 nf. Il est caractérisé par un MVR de 25cm3/10min à une température de 300°C sous une charge de 21.6kg.
**PS** : il s'agit d'un polystyrène commercialisé par la société Elf Atochem sous la référence LACQRENE 1540. Il est caractérisé par un MVR de 12cm³/10min à une température de 200°C sous une masse de 5kg..
**PSchoc** : il s'agit d'un polystyrène renforcé aux chocs , High Impact PS, commercialisé par la société Elf Atochem sous la référence LACQRENE 6631. Il est caractérisé par un MVR de 13cm³/10min à une température de 200°C sous une masse de 5kg.
**S-EB-S** : il s'agit d'un copolymère tribloc, Polystyrène-b-Polyethylène butène-*b*-Polystyrène, commercialisé par la société Shell sous la référence Kraton G 1650.
**S-B-M :** il s'agit d'un mélange d'un copolymère tribloc, Polystyrène-*b*-Polybutadiène-*b*-Polyméthylméthacrylate et d'un copolymère dibloc, Polystyrène-*b*-Polybutadiène. Le dibloc S-B est l'espèce ayant servi à la préparation du tribloc S-B-M. Le mélange S-B-M/S-B contient 65% en poids de S-B-M et 35% de dibloc S-B. Ces copolymères à blocs ont les caractéristiques suivantes.
**SBM1 :** il s'agit d'un copolymère tribloc S-B-M dans lequel S est du polystyrène, B est du polybutadiène et M du PMMA contenant 27% en fraction massique de Polystyrène, 27% en fraction massique de Polybutadiène et 46% en masse de polyméthacrylate de méthyle, obtenu par polymérisation anionique successivement d'un bloc polystyrène de masse molaire moyenne en nombre 27000 g/mol, d'un bloc polybutadiène de masse 27000 g/mol et d'un bloc polyméthacrylate de méthyle de masse molaire moyenne en nombre 46000 g/mol. Ce produit a été préparé suivant le mode opératoire décrit dans EP 524-054 et dans EP 749.987. Ce produit présente trois transitions vitreuses, l'une de -90°C, l'autre de 95°C et la troisième de 130°C.
**SB1** : il s'agit d'un copolymère dibloc S-B dans lequel S est du polystyrène et B du polybutadiène contenant 50% en fraction massique de Polybutadiène et 50% en masse de Polystyrène, obtenu par polymérisation anionique successivement d'un bloc polystyrène de masse molaire moyenne en nombre 27000 g/mol et d'un bloc polybutadiène de masse 27000 g/mol. Ce produit a été préparé suivant le mode opératoire décrit dans EP 524-054 et dans EP 749.987. Ce produit présente deux transitions vitreuses, l'une de-90°C et l'autre de 95°C.

Préparation des matériaux : Les mélanges de PPO, PS ou PSchoc et S-B-M ont été réalisés sur une extrudeuse Bi-vis de marque Werner, de diamètre de vis 30. Le profil de température utilisé est de 270°C/280°C. En dessous de ces températures le PPO ne fond pas. Avec le profil utilisé, le jonc obtenu est lisse et homogène.

Les compositions et les propriétés des matériaux sont reportées dans les tableaux 1 et 2 suivants dans lesquels les proportions sont en poids. Les propriétés du matériau sont mesurées selon les normes suivantes :
- MVR : Mesure de la fluidité du produit sous un poids de 2.16kg à 280°C
- Module : Module de flexion à 23°C mesuré suivant la norme ISO178:93
- Vicat : Vicat 50N mesuré suivant la norme ISO 306:94-B50
- CCAE : Choc Charpy entaillé mesuré à 23°C et à -30°C suivant la norme ISO179:93-1eA

**Tableau 1**

| Référence | Nature du PS | Nature du tribloc | % PPO | % PS | % tribloc |
|---|---|---|---|---|---|
| Témoin 1 | PS | x | 40 | 60 | |
| Témoin 2 | PS choc | x | 40 | 60 | |
| Témoin 3 | PS | S-EB-S | 32 | 48 | 20 |
| Témoin 4 | PS choc | S-EB-S | 32 | 48 | 20 |
| Exemple 1 | PS | S-B-M | 32 | 48 | 20 |
| Exemple 2 | PS choc | S-B-M | 32 | 48 | 20 |

**Tableau 2**

| Référence | MVR (cm3/10min) | Module (MPa) | Vicat (°C) | CCAE : 23°C (kJ/m2) | CCAE : -30°C (kJ/m2) |
|---|---|---|---|---|---|
| Témoin 1 | 14.5 | 2820 | 118.9 | 1.4 | 1.5 |
| Témoin 2 | 10.5 | 2240 | 117.8 | 15.4 | 7.5 |
| Témoin 3 | 8.5 | 2080 | 105.1 | 22.3 | 5.2 |
| Témoin 4 | 5.5 | 1540 | 97.4 | 37.2 | 16.5 |
| Exemple 1 | 8.5 | 2240 | 114.4 | 12.7 | 6.4 |
| Exemple 2 | 5.5 | 1800 | 112.9 | 31.7 | 19.4 |

### Commentaires :

Le mélange PPO/PS (témoin 1) est un matériau rigide (2820 Mpa) qui présente une température Vicat élevée mais qui est extrêmement fragile. Il est bien connu que la substitution du polystyrène par un grade de polystyrène renforcé aux chocs permet d'améliorer significativement la résistance aux chocs du mélange PPO/PS (témoin 2). Cette amélioration du choc se traduit par une légère baisse du module et une légère baisse de la température Vicat.

Les essais 3 et 4 ont été réalisés dans l'objectif d'illustrer le renforcement apporté par l'addition de copolymères S-EB-S aux mélanges PPO/PS. On constate que l'addition de 20% de tribloc S-EB-S permet une amélioration très significative de la résistance aux chocs à température ambiante. L'amélioration de la résistance aux chocs à basse température (-30°C) est plus limitée mais demeure importante. En revanche, l'addition de S-EB-S se traduit par une diminution très importante de la rigidité du matériau. En effet, on constate une baisse de module de 700 MPa entre les témoins 1 et 3 (PPO/PS) et entre les témoins 2 et 4 (PPO/PSchoc). De plus, cette baisse de module est accompagnée par une baisse rédhibitoire pour les applications de la température Vicat : une perte de 14°C entre les témoins 1 et 3 et une perte de 20°C entre les témoins 2 et 4. Par conséquent, cette solution n'est pas satisfaisante, les excellentes propriétés choc du témoin 4 sont obtenues au détriment d'une baisse de module et de Vicat trop importante.

Les exemples 1 et 2 ont été réalisés dans les mêmes conditions que tous les témoins précédents. Nous avons constaté que le protocole de transformation n'a pas d'effet destructif sur le produit à base de tribloc S-B-M PS-PB-PMMA. Après transformation, la solubilité dans le chloroforme des mélanges réalisés a été testée. Aucune réticulation du produit ne s'est produite.

L'addition de 20% d'un produit à base de tribloc S-B-M PS-PB-PMMA aux mélanges PPO/PS et PPO/PSchoc n'introduit aucune modification de la fluidité par rapport au tribloc S-EB-S. Les exemples 1 et 2 peuvent donc être comparés respectivement aux témoins 3 et 4 à viscosités égales. Le renforcement obtenu est comparable à température ambiante, en revanche les triblocs PS-PB-PMMA permettent d'obtenir un renforcement plus important à basse température (-30°C). Le résultat le plus surprenant réside néanmoins dans le comportement thermomécanique des produits. En effet, par rapport aux témoins 1 et 2, l'amélioration des propriétés choc n'est obtenue qu'au détriment d'une baisse minime du module (400Mpa) et d'une baisse très limitée de la température Vicat (4 °C et 5°C respectivement).

Les triblocs S-B-M permettent donc une amélioration très importante des propriétés choc des matériaux PPO/PS avec une baisse minime de la température Vicat et de la rigidité du matériau. C'est ce compromis particulier, qui comme nous le montrons ici est très différent de celui obtenu avec des triblocs S-EB-S, qui fait l'intérêt de notre invention.

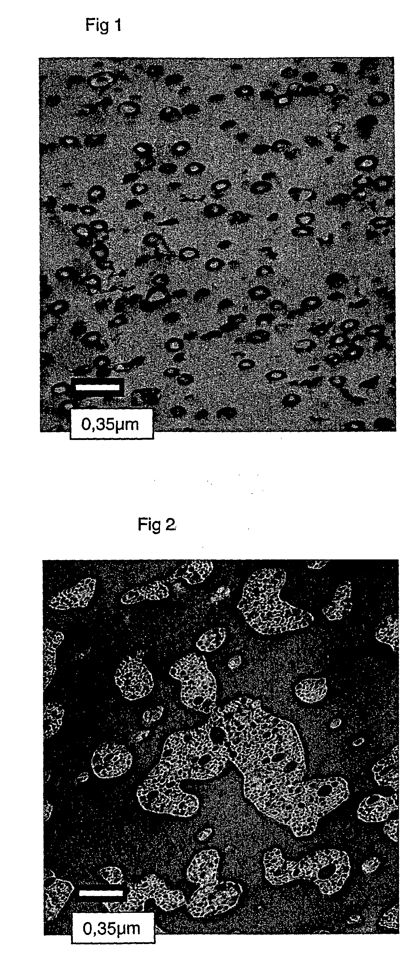

On a représenté sur les Fig 1/2 et 2/2 une photo au microscope électronique respectivement de l'exemple 2 et du témoin 4.

Préalablement à l'observation, les coupes ont été exposées à la vapeur du tétraoxyde d'Osmium pendant 30 minutes. Ce traitement a pour effet un marquage sélectif des domaines constitués de B ou de EB qui apparaissent alors avec la teinte la plus sombre sur les clichés.

On voit clairement sur la Fig1/2 une dispersion fine et régulière de nodules ayant un coeur constitué de blocs M et une écorce constituée de blocs B, les blocs S étant miscibles avec la matrice PPO/PS. Sur la Fig 2/2 on voit un mélange grossier, les parties blanches des gros nodules sont constituées des blocs S des S-EB-S qui sont ségrégés.

## Revendications

1. Matériau rigide à base de PPO et d'une résine vinyle aromatique à tenue au choc améliorée comprenant :
• 99 à 20% d'une résine (A) constituée d'un mélange de PPO et d'une résine vinyle aromatique,
• 1 à 80% d'un modifiant choc comprenant au moins un copolymère à blocs S-B-M dans lequel:
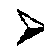 chaque bloc est relié à l'autre au moyen d'une liaison covalente ou d'une molécule intermédiaire reliée à l'un des blocs par une liaison covalente et à l'autre bloc par une autre liaison covalente,
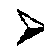 M est constitué de monomères MMA éventuellement copolymérisés avec d'autres monomères et comprend au moins 50% en poids de méthacrylate de méthyle(MMA),
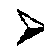 B est incompatible avec la résine (A) et avec le bloc M et sa température de transition vitreuse Tg est inférieure à la température d'utilisation du matériau rigide,
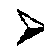 S est incompatible avec le bloc B et le bloc M et sa Tg ou sa température de fusion Tf est supérieure à la Tg de B,
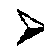 S est compatible avec la résine (A).

2. Matériau selon la revendication 1 dans lequel les blocs M sont constitués de PMMA syndiotactique à au moins 60%.

3. Matériau selon la revendication 1 ou 2 dans lequel les blocs M comprennent des monomères réactifs, avantageusement le méthacrylate de glycidyle ou le méthacrylate de tertiobutyle.

4. Matériau selon l'une quelconque des revendications précédentes dans lequel la Tg des blocs B est inférieure à 0°C.

5. Matériau selon la revendication 4 dans lequel la Tg des blocs B est inférieure à -40°C.

6. Matériau selon la revendication 5 dans lequel les blocs B sont constitués en majorité de polybutadiène-1,4.

7. Matériau selon l'une quelconque des revendications 4 à 6 dans lequel les diènes du bloc B sont hydrogénés.

8. Matériau selon la revendication 4 dans lequel le bloc B est constitué de poly(acrylate de butyle).

9. Matériau selon l'une quelconque des revendications précédentes dans lequel la Tg ou la Tf de S est supérieure à 23°C.

10. Matériau selon la revendication 9 dans lequel la Tg ou la Tf de S est supérieure à 50°C.

11. Matériau selon la revendication 10 dans lequel S est du polystyrène.

12. Matériau selon l'une quelconque des revendications précédentes dans lequel la masse molaire moyenne en nombre du copolymère à blocs S-B-M peut être comprise entre 10000 g/mol et 500000 g/mol.

13. Matériau selon la revendication 12 dans lequel la masse molaire moyenne en nombre du copolymère à blocs S-B-M peut être comprise entre 20000 g/mol et 200000 g/mol.

14. Matériau selon l'une quelconque des revendications précédentes dans lequel la proportion de modifiant choc est de 1 à 35% pour respectivement 99 à 65% de résine (A).

15. Matériau selon la revendication 14 dans lequel la proportion de modifiant choc est de 4 à 25% pour respectivement 96 à 75% de résine (A).

16. Matériau selon l'une quelconque des revendications précédentes dans lequel le modifiant choc comprend au moins un copolymère à blocs S-B-M et au moins un polymère choisi parmi les copolymères diblocs S-B.

17. Matériau selon la revendication 16 dans lequel les blocs S et B du dibloc S-B sont ceux des revendications 1 et 4 à 11.

18. Matériau selon la revendication 17 dans lequel le dibloc S-B a une masse molaire moyenne en nombre qui peut être comprise entre 10000 g/mol et 500000 g/mol.

19. Matériau selon l'une quelconque des revendications précédentes dans lequel le modifiant choc comprend aussi au moins un tribloc S-B-S choisi parmi les triblocs S-B-S linéaires et les triblocs S-B-S en étoile.

20. Matériau selon l'une quelconque des revendications précédentes dans lequel tout ou partie du tribloc S-B-M est remplacée par un pentabloc M-B-S-B-M.

21. Matériau selon l'une quelconque des revendications précédentes dans lequel la résine vinyle aromatique constituant la résine (A) est choisie parmi le polystyrène et le polystyrène choc.

22. Matériau selon l'une quelconque des revendications précédentes dans lequel le rapport en poids PPO sur résine vinyle aromatique est compris entre 1/9 et 9/1 et de préférence entre 3/7 et 7/3.
